Europäisches Patentamt

European Patent Office

Office européen des brevets

(19)

(11) EP 0 865 357 B1

(12) FASCICULE DE BREVET EUROPEEN

(45) Date de publication et mention
de la délivrance du brevet:
02.10.2002 Bulletin 2002/40

(51) Int Cl.⁷: B29D 24/00

(86) Numéro de dépôt international:
PCT/FR97/01411

(21) Numéro de dépôt: 97935645.8

(22) Date de dépôt: 29.07.1997

(87) Numéro de publication internationale:
WO 98/004398 (05.02.1998 Gazette 1998/05)

(54) **FORMATION D'UN INSERT DANS UN PANNEAU EN MATERIAU COMPOSITE DU TYPE SANDWICH A AME ALVEOLAIRE**

FORMEN EINES EINSATZES IN EIN PANEL, WOBEI DAS PANEL AUS SCHICHTARTIGEN VERBUNDWERKSTOFFPLATTEN MIT EINEM ZELLIGEN KERN BESTEHT

FORMING AN INSERT IN A PANEL MADE OF A SANDWICH-TYPE COMPOSITE MATERIAL WITH A CELLULAR CORE

(84) Etats contractants désignés:
DE FR GB

(30) Priorité: 30.07.1996 FR 9609586

(43) Date de publication de la demande:
23.09.1998 Bulletin 1998/39

(73) Titulaire: PEGUFORM FRANCE
01100 Oyonnax (FR)

(72) Inventeur: CHERVIN, Christophe
F-44590 Saint-Vincent-des-Landes (FR)

(74) Mandataire: Warcoin, Jacques
Cabinet Régimbeau
20, rue de Chazelles
75847 Paris cedex 17 (FR)

(56) Documents cités:
EP-A- 0 135 708        EP-A- 0 649 736
WO-A-89/00497          DE-A- 2 836 418
FR-A- 2 686 043        US-A- 4 053 667
US-A- 4 479 992        US-A- 5 417 788

• PATENT ABSTRACTS OF JAPAN vol. 007, no. 016 (M-187), 22 janvier 1983 & JP 57 173126 A (NISSAN JIDOSHA KK;OTHERS: 01), 25 octobre 1982,

## Description

La présente invention concerne de manière générale des panneaux de structure composite du type sandwich à âme alvéolaire notamment pour véhicules automobiles, et plus particulièrement un procédé de réalisation d'une zone rigidifiée formant insert au sein d'un tel panneau en vue notamment du montage d'un système de fixation tel que par exemple un système à vis ou à clip.

Les matériaux du type sandwich à âme alvéolaire présentent des caractéristiques de rigidité très importantes eu égard à leur poids.

De manière classique, la construction de tels matériaux consiste à emprisonner par collage ou soudure une âme alvéolaire de faibles caractéristiques mécaniques entre deux peaux présentant une épaisseur beaucoup plus faible que celle de l'âme alvéolaire mais possédant d'excellentes caractéristiques mécaniques.

En outre, on connaît du document FR - 2 711 573 appartenant à la Demanderesse, un procédé pour réaliser un panneau de structure composite du type sandwich à âme alvéolaire, selon lequel on réalise ledit panneau en une seule étape, par pressage dans un moule à froid, d'un empilement constitué d'au moins une première peau en matériau thermoplastique renforcé estampable, d'une âme alvéolaire en matériau thermoplastique, d'une deuxième peau en matériau thermoplastique renforcé estampable, et d'une première couche de revêtement externe en matériau tissé ou non tissé, lesdites peaux étant préalablement chauffées hors du moule à une température de ramollissement.

Un tel procédé est particulièrement avantageux dans le fait qu'il permet en une seule opération de générer la cohésion entre les différentes couches de la structure composite et de conformer ledit panneau. Le panneau ainsi réalisé conserve toutes les propriétés mécaniques dûes à la structure sandwich à âme alvéolaire.

Les panneaux de structure composite du type sandwich à âme alvéolaire présentent des caractéristiques de rigidité suffisantes permettant de renforcer structurellement des structures mécaniques soumises à des contraintes importantes sans pour cela trop les alourdir. De tels panneaux sont alors couramment utilisés dans le secteur de la construction navale, aéronautique et ferroviaire.

De manière classique, pour renforcer une structure mécanique on fixe alors à celle-ci un panneau de structure composite du type sandwich à âme alvéolaire. Dans ce cas, le système de fixation sert à transmettre localement les sollicitations mécaniques de la structure mécanique vers le panneau de structure sandwich.

Généralement, pour le montage d'un système permettant la fixation d'un panneau de structure composite de type sandwich sur une structure mécanique, on utilise des inserts qui sont introduits dans la structure sandwich. Ces inserts sont de manière classique des pièces rapportées ou des ferrures d'attache, métalliques ou non qui constituent des supports à la transmission localisée des sollicitations mécaniques.

Suivant l'intensité des sollicitations mécaniques localisées, on répartit les inserts sur la longueur dudit panneau.

Les inserts permettent d'abaisser jusqu'à un taux admissible les sollicitations localisées mécaniques transmises au matériau sandwich considéré.

Diverses méthodes déjà connues sont mises en oeuvre pour mettre en place de tels inserts dans un panneau de structure composite du type sandwich à âme alvéolaire.

Une des méthodes déjà connue consiste à percer le panneau de structure sandwich à âme alvéolaire sur toute son épaisseur, à positionner l'insert dans le perçage et à remplir le vide restant entre l'insert et le matériau d'une résine de remplissage du type époxyde. Une telle résine de remplissage peut être allégée par incorporation de microballons phénoliques.

Une autre méthode connue pour l'ajonction d'un insert dans un panneau de structure du type sandwich à âme alvéolaire, consiste à souder ou à coller l'insert sur les bords du panneau.

On connaît du document FR - 2 686 043 un procédé de réalisation d'un panneau de structure composite du type sandwich à âme alvéolaire, comprenant des inserts métalliques, qui consiste à préchauffer les peaux constituant le matériau sandwich afin de les rendre malléables et de favoriser leur accrochage par thermosoudage aux alvéoles de l'âme alvéolaire, et à préchauffer le ou les inserts métalliques avant de réaliser un empilage des différents éléments dudit panneau dans un outillage de mise en forme de celui-ci.

Enfin, on connaît du document DE-2836418, la réalisation dans un matériau sandwich à âme alvéolaire tubulaire, d'un logement ponctuel par compression de la surface dudit matériau, dans lequel une garniture est collée et destinée à acceuillir un boulon ou un rivet.

Toutes les méthodes précitées déjà connues pour mettre en place des inserts dans un panneau de structure composite de type sandwich à âme alvéolaire, sont difficilement applicables dans le domaine de la construction automobile, où le montage de véhicules automobiles est réalisé à de fortes cadences de production, car toutes ces méthodes sont relativement longues à mettre en oeuvre et la réalisation de tels panneaux par de telles méthodes présente un coût trop élevé.

La présente invention propose alors un nouveau procédé de réalisation d'une zone rigidifiée formant insert à l'intérieur d'un panneau de structure composite du type sandwich à âme alvéolaire notamment pour véhicules automobiles, dont la mise en oeuvre est simple et économique.

Ce procédé est un perfectionnement du procédé décrit dans le document FR-2711 573 appartenant à la Demanderesse.

Plus particulièrement, il est prévu un procédé selon la revendication 1 pour réaliser une zone rigidifiée formant insert destinée à accueillir notamment un système de fixation, à l'intérieur d'un panneau de structure composite du type sandwich, ledit panneau comportant un empilement d'au moins une première peau, d'une âme alvéolaire en matériau thermoplastique et d'une deuxième peau, lesdites première et deuxième peaux étant constituées de fibres de verre et d'un matériau thermoplastique. Simultanément au formage dudit panneau lui-même réalisé par pressage dudit empilement, lesdites première et deuxième peaux étant préalablement chauffées, on effectue un compactage localisé par compression, sous une pression de compactage comprise entre $10^6$ et $30.10^5$ Pa, dudit panneau.

Ainsi, selon l'invention, sans aucune opération supplémentaire, on forme le panneau de structure sandwich et on réalise au sein de ladite structure les inserts nécessaires à sa fixation ultérieure à une structure mécanique d'un véhicule automobile.

Conformément à ce mode de réalisation préférentiel du procédé selon l'invention, le compactage localisé est réalisé par l'intermédiaire d'au moins un bossage prévu sur au moins une paroi du moule de formage dudit panneau, la pression de compactage étant égale à la pression de formage dudit panneau.

Il est clair que cette pression de compactage dépend des caractéristiques du panneau de structure sandwich à réaliser, et en particulier de sa surface, de sa forme générale, des matériaux utilisés pour la réalisation des peaux et de l'âme alvéolaire.

En outre, selon une caractéristique particulièrement avantageuse du procédé conforme à la présente invention, préalablement au compactage localisé dudit panneau, on chauffe un pré-assemblage constitué par l'empilement d'au moins la première peau, de l'âme alvéolaire et de la deuxième peau.

Lors du compactage localisé dudit panneau, les première et deuxième peaux présentent une température de formage comprise entre 160 et 200 degrés environ.

Ainsi, de manière surprenante et inattendue, il est possible de placer une-âme alvéolaire du type par exemple à structure nid d'abeilles à parois fines ou à structure tubulaire à base de polypropylène, pendant plusieurs dizaines de secondes dans un four dont la température supérieure à 200 degrés, sans pour cela détruire les caractéristiques mécaniques de l'âme alvéolaire, alors que l'on sait que le polypropylène commence à fluer sérieusement vers 115 degrés. Le fait de chauffer le pré-assemblage des deux peaux et de l'âme alvéolaire prise en sandwich entre celles-ci, permet d'éviter toutes déperditions de chaleur dues au transfert de chaleur entre les peaux et l'extérieur, de telles déperditions intervenant lorsque les peaux sont chauffées indépendamment de l'âme alvéolaire et assemblées à froid avec celle-ci. De telles déperditions de chaleur imposaient alors une augmentation de la capacité calorifique des peaux lors de leur chauffage en utilisant des grammages plus importants, ce qui pénalisait le coût final de fabrication de tels panneaux en matériau sandwich.

L'invention propose également un panneau de structure composite selon la revendication 10 du type sandwich à âme alvéolaire pourvu d'au moins une zone rigidifiée formant insert réalisée selon le procédé conforme à l'invention.

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue partielle schématique en coupe de côté d'un panneau de structure composite du type sandwich à âme alvéolaire muni d'un insert rigide selon l'invention,
- la figure 2 est une vue partielle schématique en coupe du moule de formage du panneau représenté sur la figure 1,
- la figure 3 représente schématiquement un montage pour la réalisation d'essais statiques de traction et d'essais dynamiques de fatigue sur une éprouvette du type du panneau représenté sur la figure 1.

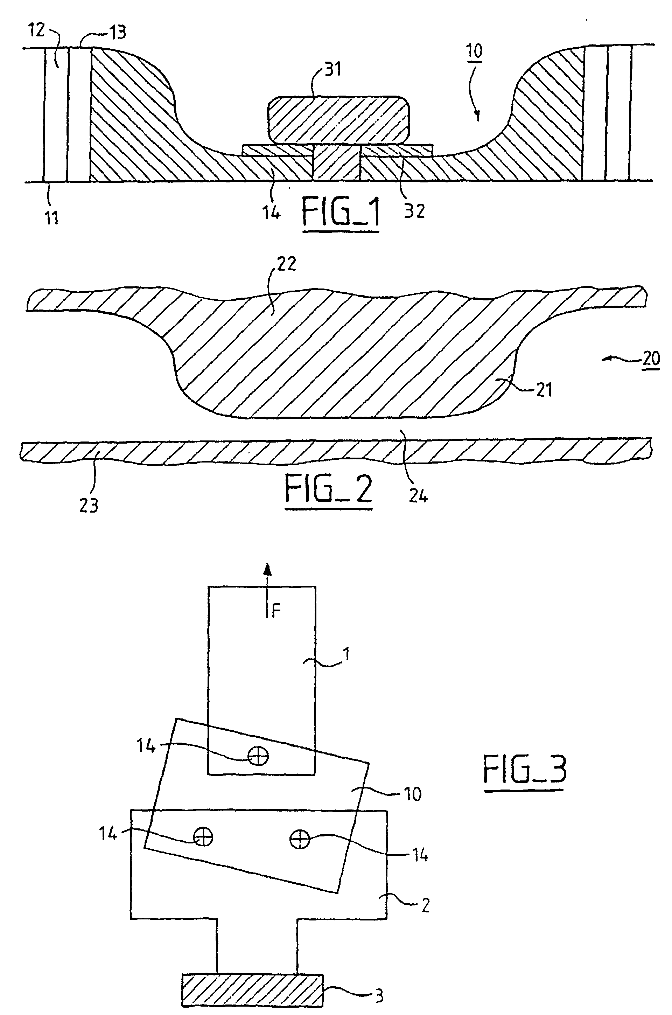

Sur la figure 1, on a représenté schématiquement et de manière partielle, un panneau de structure composite du type sandwich par exemple pour véhicules automobiles, qui comporte un empilement d'au moins une première peau 11, d'une âme alvéolaire 12 en matériau thermoplastique et d'une deuxième peau 13.

Les première et seconde peaux 11, 13 sont constituées d'un tissu de fibres de verre et d'un matériau thermoplastique. Le matériau thermoplastique est une polyoléfine et de préférence du polypropylène.

On peut aussi envisager en variante que les première et seconde peaux soient constituées d'un matériau thermoplastique renforcé estampable.

L'âme alvéolaire 12 présente une structure en nid d'abeilles à alvéoles hexagonales ou tubulaires, constituée principalement de polyoléfine et de préférence de polypropylène.

Le panneau 10 de la figure 1 est formé par pressage de l'empilement de la première peau 11, de l'âme alvéolaire 12 et de la seconde peau 13.

Lesdites première et deuxième peaux 11, 13 sont préalablement chauffées de façon à les rendre malléables.

De manière avantageuse, pour ramollir les première et seconde peaux, on chauffe un pré-assemblage constitué par l'empilement d'au moins la première peau 11, de l'âme alvéolaire 12 et de la deuxième peau 13.

Lors du formage dudit panneau, la température de formage desdites première et seconde peaux 11, 13 est comprise entre 160 et 200 degrés environ et ici de l'ordre de 180 degrés.

Le pressage de l'empilement de la première peau 11, de l'âme alvéolaire 12 et de la deuxième peau 13 est effectué sous une pression de formage comprise entre $10^6$ et $30.10^5$ Pa, de préférence entre $15.10^5$ et $20.10^5$ Pa.

Comme le montre la figure 1, le panneau 10 comprend ici une zone rigidifiée formant insert 14 destinée à accueillir notamment un système de fixation constitué dans l'exemple représenté par une vis 31 et une rondelle 32. Elle est réalisée selon un procédé conforme à la présente invention.

Le corps de la vis 31 est introduit dans cette zone rigidifiée 14 et la rondelle 32 positionnée à l'extérieur entre la surface du panneau 10 et la tête de la vis 31 permet de répartir dans l'insert ainsi formé les efforts de compression de la vis.

Selon le procédé conforme à l'invention, la zone rigidifiée formant insert 14 est réalisée par compactage localisé par compression, sous une pression de compactage comprise entre $10^6$ et $30.10^5$ Pa, dudit panneau 10, lesdites première et deuxième peaux 11, 13 étant préalablement chauffées.

Avantageusement, le compactage localisé est effectué simultanément au formage dudit panneau 10 lui-même à l'aide d'au moins un bossage 21 prévu sur au moins une paroi du moule 20 pour le formage dudit panneau 10, la pression de compactage étant égale à la pression de formage du panneau 10 comprise entre $10^6$ et $30.10^5$ Pa et de préférence entre $15.10^5$ et $20.10^5$ Pa.

A cet effet, comme le montre plus particulièrement la figure 2, le poinçon 22 du moule 20 comprend le bossage 21. L'entrefer 24 prévu entre le poinçon 22, au niveau du bossage 21, et la matrice 23 du moule 20, correspond à une épaisseur de compactage égale à celle de l'insert à réaliser.

Selon une caractéristique avantageuse du procédé selon l'invention, on peut prévoir que lors du chauffage du pré-assemblage comprenant l'empilement d'au moins la première peau 11, de l'âme alvéolaire 12 et de la deuxième peau 13, on réalise un échauffement plus accentué de la zone localisée dudit pré-assemblage où s'effectuera ultérieurement le compactage localisé par compression. Ceci permet d'obtenir un compactage plus homogène de ladite zone par fusion du polypropylène.

Le taux de compactage localisé dudit panneau s'exprime selon l'expression :

$$e^{insert} = 2\, e^{peau} + (e^{ame\ alvéolaire}/10)$$

où,

- $e^{insert}$ représente l'épaisseur de la zone rigidifiée réalisée après compactage localisé du panneau 10,

- $e^{peau}$ représente l'épaisseur des première et seconde peaux 11, 13, et

- $e^{âme\ alvéolaire}$ représente l'épaisseur initiale de l'âme alvéolaire 12 dont la masse volumique apparente est comprise entre 70 et 85 kg/m$^3$.

Bien entendu, pour des masses volumiques apparentes de l'âme alvéolaire utilisée inférieure à 70 kg/m$^3$ ou supérieure à 85 kg/m$^3$, l'expression précitée est légèrement modifiée. En particulier, le coefficient 1/10 est modifié.

Pour un pré-assemblage initial présentant une épaisseur de l'ordre de 12 millimètres, on obtient alors une épaisseur d'insert d'environ 3 millimètres.

La zone rigidifiée 14 ainsi réalisée dans le panneau 10 de structure composite du type sandwich permet alors avantageusement à la manière d'un insert de transmettre des sollicitations mécaniques localisées subies par la pièce de structure (ici non représentée), auquel le panneau 10 est fixé par l'intermédiaire du système de fixation constitué par exemple par la vis 31 et la rondelle 32.

Une telle zone 14 présente la rigidité suffisante permettant d'abaisser jusqu'à un taux admissible les sollicitations localisées mécaniques transmises audit panneau de structure sandwich considéré.

A cet effet, afin de mesurer l'intensité des sollicitations mécaniques supportables par la zone rigidifiée formant insert 14 réalisée selon le procédé conforme à l'invention, il a été réalisé d'une part des essais statiques de traction aux limites, et d'autre part des essais dynamiques de fatigue sur une éprouvette du type du panneau 10 représenté sur la figure 1. Le montage d'essais est plus particulièrement représenté sur la figure 3.

Comme on peut le voir sur cette figure, l'éprouvette est fixée d'une part par deux systèmes de fixation associés à deux zones formant insert 14, à une platine inférieure 2 constituant une structure mécanique fixée elle-même à un mors fixe 3 et d'autre part, par un système de fixation associé à une zone formant insert 14 à une platine supérieure 1 présentant une épaisseur de tôle d'environ 1,5 millimètres.

Les sollicitations mécaniques sont effectuées par l'intermédiaire de la platine supérieure 1 selon la flèche F.

Les systèmes de fixation utilisés sont des boulons du type M8.

Les essais statiques ont permis de montrer qu'un boulon du type M8 serrant une zone rigidifiée formant insert 14 tel que réalisée dans le panneau 10 selon le procédé conforme à l'invention, avec un couple de 4 Nm est capable de transmettre une traction de l'ordre de 2000 Newton à ladite zone formant insert 14 sans que celle-ci ne subisse de déformations plastiques.

Bien entendu, cette valeur de 2000 Newton dépend des éléments constituant ledit panneau composite de type sandwich, donc la zone rigidifiée formant insert 14 et en particulier de la nature des peaux 11, 13 utilisée.

Les essais dynamiques de fatigue ont permis de montrer que la zone rigidifiée formant insert 14 ainsi réalisée par le procédé conforme à la présente invention, est capable de résister durant 100 à 150 000 cycles à une sollicitation mécanique se présentant sous la forme d'un signal sinusoïdal de fréquence 20 hertz et d'amplitude 1850 Newton (ce qui correspond à + 1850 Newton en traction et - 1850 Newton en compression).

Il est intéressant de préciser que la capacité d'un insert à remplir sa fonction de transmission de sollicitations mécaniques de la structure mécanique à la structure composite du type sandwich dépend de la continuité qu'il peut assurer entre les deux structures. En ce qui concerne la zone rigidifiée formant insert réalisée selon l'invention, celle-ci assure une continuité maximum du fait qu'elle est réalisée par compactage de la structure composite elle-même sans provoquer la destruction de l'architecture structurelle interne des éléments de ladite structure composite du type sandwich. En particulier, on ne rompt pas les fibres des peaux 11 et 13. L'insert présente alors une capacité fonctionnelle maximum.

En particulier, on peut prévoir selon le procédé conforme à l'invention, de chauffer préalablement et de manière indépendante les peaux 11 et 13 puis former et compacter localement ledit panneau dans un moule à froid à température ambiante comme cela est décrit dans le document FR - 2 711 573 appartenant à la Demanderesse.

## Revendications

**1.** Procédé pour réaliser une zone rigidifiée formant insert (14) destinée à accueillir notamment un système de fixation (31, 32), à l'intérieur d'un panneau (10) de structure composite du type sandwich, ledit panneau (10) comportant un empilement d'au moins une première peau (11), d'une âme alvéolaire (12) en matériau thermoplastique et d'une deuxième peau (13),lesdites première et deuxième peaux étant constituées de fibres de verre et d'un matériau thermoplastique, le procédé comportant des étapes où :

- on chauffe lesdites première et deuxième peaux (11,13), puis,
- on forme ledit panneau (10) par pressage dudit empilement tout en effectuant un compactage localisé par compression, sous une pression de compactage comprise entre $10^6$ et $30 \cdot 10^5$ Pa, dudit panneau (10).

**2.** Procédé selon la revendication 1, **caractérisé en ce que** le compactage localisé dudit panneau (10) est effectué à l'aide d'au moins un bossage (21) prévu sur au moins une paroi du moule de formage (20) dudit panneau (10), la pression de compactage étant égale à la pression de formage dudit panneau (10) comprise entre $10^6$ et $30.10^5$ Pa.

**3.** Procédé selon l'une des revendications 1 ou 2, **caractérisé en ce que** préalablement au compactage localisé dudit panneau (10), on chauffe un pré-assemblage constitué par l'empilement d'au moins la première peau (11), de l'âme alvéolaire (12) et de la deuxième peau (13).

**4.** Procédé selon la revendication 3, **caractérisé en ce que** lors du chauffage du pré-assemblage, on réalise un échauffement plus accentué de la zone localisée dudit pré-assemblage où s'effectuera ultérieurement le compactage localisé par compression.

**5.** Procédé selon l'une des revendications 1 à 4, **caractérisé en ce que** lors du compactage localisé dudit panneau (10), les première et deuxième peaux (11, 13) présentent une température de formage comprise entre 160 et 200 degrés environ.

**6.** Procédé selon l'une quelconque des revendications 1 à 5, **caractérisé en ce que** le taux de compactage localisé dudit panneau (10) s'exprime selon l'expression :

$$e^{insert} = 2e^{\ peau} + (e^{ame\ alvéolaire}/10)$$

- $e^{insert}$ représente l'épaisseur de la zone formant insert réalisée après compactage localisé du panneau (10),
- $e^{peau}$ représente l'épaisseur des première et seconde peaux (11, 13),
- $e^{âme\ alvéolaire}$ représente l'épaisseur initiale de l'âme alvéolaire (12) dont la masse volumique apparente est comprise entre 70 et 85 kg/m3.

**7.** Procédé selon l'une quelconque des revendications 1 à 6, **caractérisé en ce que** les première et seconde peaux (11, 13) sont constituées d'un tissu de fibres de verre et d'un matériau thermoplastique.

**8.** Procédé selon la revendication 7, **caractérisé en ce que** le matériau thermoplastique est une polyoléfine et de préférence du polypropylène.

**9.** Procédé selon l'une quelconque des revendications 1 à 8, **caractérisé en ce que** l'âme alvéolaire (12) présente une structure tubulaire constituée principalement de polyoléfine, et de préférence de polypropylène.

**10.** Panneau (10) de structure composite du type sandwich, comportant un empilement d'au moins une première peau (11), d'une âme alvéolaire (12) en matériau thermoplastique et d'une deuxième peau (13), ledit panneau (10) étant pourvu d'au moins une zone rigidifiée formant insert (14) réalisée suivant le procédé selon l'une quelconque des revendications 1 à 9.

## Claims

1. Process for producing an insert-forming stiffened region (14) intended to receive in particular a fastening system (31, 32), within a panel (10) having a sandwich-type composite structure, the said panel (10) comprising a stack of at least a first skin (11), of a cellular core (12) made of a thermoplastic, and of a second skin (13), the said first and second skins consisting of glass fibres and a thermoplastic, the process comprising steps in which:

   - the said first and second skins (11, 13) are heated, then
   - the said panel (10) is formed by pressing the said stack while carrying out localized compacting by compression, under a compacting pressure of between $30 \times 10^5$ and $10^6$ Pa, of the said panel (10).

2. Process according to Claim 1, **characterized in that** the localized compacting of the said panel (10) is carried out by means of at least one hump (21) provided on at least one wall of the mould (20) for forming the said panel (10), the compacting pressure being equal to the pressure of between $30 \times 10^5$ and $10^6$ Pa for forming the said panel (10).

3. Process according to either of Claims 1 and 2, **characterized in that**, prior to the localized compacting of the said panel (10), a preassembly consisting of the stack of at least the first skin (11), of the cellular core (12) and of the second skin (13) is heated.

4. Process according to Claim 3, **characterized in that**, while the preassembly is being heated, greater heating is applied to the localized region of the said preassembly where the localized compacting by compression will subsequently take place.

5. Process according to one of Claims 1 to 4, **characterized in that**, while the said panel (10) is being locally compacted, the first and second skins (11, 13) have a forming temperature of between 160 and 200 degrees approximately.

6. Process according to any one of Claims 1 to 5, **characterized in that** the degree of localized compacting of the said panel (10) is given by the expression:

$$e_{insert} = 2e_{skin} + (e_{cellular\ core}/10)$$

where:

   - $e_{insert}$ represents the thickness of the insert-forming region produced after localized compacting of the panel (10);
   - $e_{skin}$ represents the thickness of the first and second skins (11, 13); and
   - $e_{cellular}$ core represents the initial thickness of the cellular core (12), the bulk density of which is between 70 and 85 kg/m$^3$.

7. Process according to any one of Claims 1 to 6, **characterized in that** the first and second skins (11, 13) consist of a fabric of glass fibres and a thermoplastic.

8. Process according to Claim 7, **characterized in that** the thermoplastic is a polyolefin, preferably polypropylene.

9. Process according to any one of Claims 1 to 8, **characterized in that** the cellular core (12) has a tubular structure consisting mainly of a polyolefin, preferably polypropylene.

10. Panel (10) having a sandwich-type composite structure, comprising a stack of at least a first skin (11), of a cellular core (12) made of a thermoplastic and of a second skin (13), the said panel (10) being provided with at least one insert-forming stiffened region (14) produced by the process according to any one of Claims 1 to 9.

## Patentansprüche

1. Verfahren zum Herstellen eines Versteifungsbereichs, der einen Einsatz (14) für das Aufnehmen insbesondere eines Befestigungssystems (31, 32) in einem Panel (10) aus schichtartiger Verbundstruktur bildet, wobei das Panel (10) einen Stapel mit wenigstens einer ersten Schicht (11), einem zelligen Kern (12) aus thermoplastischem Material und einer zweiten Schicht (13) umfasst, wobei die erste und zweite Schicht aus Glasfasern und einem thermoplastischen Werkstoff bestehen, wobei das Verfahren die Schritte aufweist:

   Aufheizen der ersten und der zweiten Schicht (11, 13) und anschließend
   Formen des Panels (10) durch Pressen des Stapels, wobei durch Kompression eine lokale Verdichtung erzeugt wird, bei der der Verdichtungsdruck des Panels (10) zwischen $10^6$ und $30 * 10^5$ Pa liegt.

**2.** Verfahren nach Anspruch 1,
**dadurch gekennzeichnet, dass**
das lokale Verdichten des Panels (10) mit Hilfe wenigstens eines Vorsprungs (21) auf wenigstens einer Wand der Pressform (20) des Panels (10) erfolgt, wobei der Verdichtungsdruck gleich dem Formgebungsdruck des Panels (10) ist und zwischen $10^6$ und $30 * 10^5$ Pa liegt.

**3.** Verfahren nach Anspruch 1 oder 2,
**dadurch gekennzeichnet, dass**
vor der lokalen Verdichtung des Panels (10) ein vorläufiger Aufbau aus dem Stapel mit wenigstens der ersten Schicht (11), dem zelligen Kern (12) und der zweiten Schicht (13) aufgeheizt wird.

**4.** Verfahren nach Anspruch 3,
**dadurch gekennzeichnet, dass**
beim Aufheizen des vorläufigen Aufbaus ein gezieltes Aufheizen des lokalen Bereichs des vorläufigen Aufbaus erfolgt, in dem später die lokale Verdichtung durch Druck erfolgt.

**5.** Verfahren nach einem der Ansprüche 1 bis 4,
**dadurch gekennzeichnet, dass**
bei dem lokalen Verdichten des Panels (10) die erste und zweite Schicht (11, 13) eine Formgebungstemperatur zwischen etwa 160 und 200 Grad aufweist.

**6.** Verfahren nach einem der Ansprüche 1 bis 5,
**dadurch gekennzeichnet, dass**
das lokale Verdichtungsverhältnis des Panels (10) gegeben ist durch:

$$e^{Einsatz} = 2 \cdot e^{Schicht} + (e^{zelligerKern}/10) \, ,$$

wobei

- $e^{Einsatz}$ die Dicke des Bereichs ist, der den Einsatz bildet, nach dem lokalen Verdichten des Panels (10),
- $e^{Schicht}$ die Dicke der ersten und der zweiten Schicht ist und
- $e^{zelligerKern}$ die Anfangsdicke des zelligen Kerns (12) ist, dessen Rohdichte zwischen 70 und 85 kg/m$^3$ liegt.

**7.** Verfahren nach einem der Ansprüche 1 bis 6,
**dadurch gekennzeichnet, dass**
die erste und zweite Schicht (11, 13) aus einem Glasfasergewebe und einem thermoplastischen Material bestehen.

**8.** Verfahren nach Anspruch 7,
**dadurch gekennzeichnet, dass**
das thermoplastische Material ein Polyolefin und vorzugsweise ein Polypropylen ist.

**9.** Verfahren nach einem der Ansprüche 1 bis 8,
**dadurch gekennzeichnet, dass**
der zellige Kern (12) eine röhrenförmige Struktur aufweist und im wesentlichen aus Polyolefin und vorzugsweise Polypropylen besteht.

**10.** Panel (10) aus schichtartigem Verbundwerkstoff mit einem Stapel mit wenigstens einer ersten Schicht (11), einem zelligen Kern (12) aus thermoplastischem Material und einer zweiten Schicht (13), wobei das Panel (10) wenigstens einen Versteifungsbereich umfasst, der einen Einsatz (14) bildet, der nach dem Verfahren nach einem der Ansprüche 1 bis 9 hergestellt ist.

12    13

31                    10

11    14    FIG_1    32

22

20

21

23    FIG_2    24

F

1

14

10

14

14

2

FIG_3

3